# FASCICULE DE BREVET EUROPEEN

(11) **EP 3 748 281 B1**
(45) Date de publication et mention de la délivrance du brevet: **06.07.2022**
(21) Numéro de dépôt: 20177894.1
(22) Date de dépôt: 02.06.2020
(51) Int. Cl.: G01B 3/34, G01P 13/02, B64D 43/02, G01P 21/02, B64F 5/10, B64F 5/60

(54) **DISPOSITIF ET PROCÉDÉ DE CONTRÔLE DE LA GÉOMÉTRIE D'UNE SONDE D'INCIDENCE**
VORRICHTUNG UND VERFAHREN ZUR KONTROLLE DER GEOMETRIE EINER EINFALLSWINKELSONDE
APPARATUS AND METHOD FOR CONTROLLING THE GEOMETRY OF AN INCIDENCE PROBE

(30) Priorité: 06.06.2019 FR 1906004
(43) Date de publication de la demande: 09.12.2020
(73) Titulaire: THALES, 92400 Courbevoie (FR)
(72) Inventeur: HEMELSDAEL, Cécile, 41100 VENDOME (FR); DAMIENS TESSIER, Stéphane, 41100 VENDOME (FR)
(74) Mandataire: Marks & Clerk France

(56) Documents cités:
- FR-A1- 2 531 595
- FR-A1- 2 856 799
- US-A1- 2014 116 106

## Description

### Domaine de l'invention

Le document concerne la maintenance aéronautique et en particulier le contrôle sur avion des girouettes qui équipent les sondes d'incidence des avions.

### Etat de la technique

Une sonde d'incidence (ou sonde AOA pour « Angle Of Attack » en anglais, angle d'attaque en français) est un appareil physique monté sur un avion (généralement près des portes). Une sonde d'incidence permet notamment de déterminer un risque de décrochage (décollement de la couche limite et disparition de la portance).

Une sonde d'incidence comporte une girouette. Il arrive régulièrement des dommages sur les girouettes d'incidences lors des opérations de maintenance, ou lors du débarquement des passagers ou des bagages hors des soutes (approche de la nacelle avec collision). Une girouette peut être endommagée de différentes manières (e.g. tordue, vrillée, déchirée, cassée, choc convexe ou concave, etc).

Certains dommages peuvent ne pas être visibles à l'œil nu. Ils sont donc généralement détectés par le système avion lors d'un vol suivant. Il arrive également des dommages non-visibles sur la dernière ligne d'assemblage avion qui ne sont détectés qu'après le premier vol de mise en service.

Afin de contrôler la géométrie et le bon fonctionnement des girouettes, les sondes d'incidence sont régulièrement déposées en station de réparation. Il n'existe actuellement aucun dispositif ni aucune méthode fiable pour vérifier une girouette directement sur un avion (autrement que par inspection visuelle).

FR 2 856 799 A1 décrit une station de contrôle de la géométrie d'une sonde d'incidence destinée à être montée sur un aéronef.

Les approches connues pour déterminer et vérifier la conformité d'une sonde d'incidence en station de réparation comprennent notamment l'utilisation d'un réglet ou d'un repère rectiligne, lorsqu'il existe une suspicion de girouette tordue. Un réglet est un outil étalonné (i.e. dont on sait qu'il est droit). Le réglet est posé contre la girouette et toute déformation le cas échéant devient visible à l'œil nu. Les solutions connues présentent généralement des inconvénients. Par exemple, la mesure au réglet peut générer des difficultés d'interprétation en fonction de la position du réglet et du défaut de la girouette. De plus, la matière du réglet peut endommager la girouette si celle-ci s'avère ne pas être tordue. L'utilisation d'un repère rectiligne peut générer des difficultés d'interprétation quant au résultat, par exemple en fonction de la position de la sonde et de la torsion de la girouette. Ces méthodes sont efficaces, mais nécessitent le démontage de la sonde d'incidence.

En résumé, les méthodes connues ne sont pas optimales en station de réparation; a *fortiori,* ces solutions ne sont pas satisfaisantes pour des vérifications directement effectuées sur l'avion (par exemple à l'arrivée d'un avion, ou avant son départ).

Il existe un besoin pour des dispositifs et des procédés plus sophistiqués pour la vérification des sondes d'incidence directement sur avion.

### Résumé de l'invention

Le document présente un dispositif selon la revendication 1 et un procédé selon la revendication 13 pour contrôler la géométrie d'une sonde d'incidence d'un aéronef. Selon les modes de réalisation, ledit dispositif comprend plusieurs paliers, un palier comprenant une encoche dont les dimensions géométriques sont spécifiquement configurées pour recevoir en butée une portion de ladite sonde d'incidence. Le dispositif permet une inspection visuelle mais peut être également instrumenté (cellule photo-électrique, laser, caméra) pour vérifier en détail la géométrie de la sonde .Des développements décrivent notamment l'emploi de témoins de signalisation, de paliers motorisés, d'un ou de plusieurs capteurs d'images, de matériaux spécifiques, de communication avec des ordinateurs, ou de placement par drone et/ou bras robotique. Des aspects de logiciel sont décrits.

Le dispositif selon l'invention permet de vérifier l'état de la girouette *directement sur avion.* La vérification est rapide et sûre.

Selon l'invention, la géométrie prédéfinie de l'outillage permet d'épouser la géométrie de la girouette et permet d'obtenir un résultat efficace et précis. Le travail des équipes de maintenance s'en trouve facilité, de même que les équipes en centres de réparation. Dans un mode de réalisation, le dispositif peut prendre en compte différentes tolérances, par exemple de perpendicularité ou de rectitude de l'objet vérifié.

Avantageusement, le dispositif selon l'invention évite ou limite les erreurs d'interprétation, en soi et en comparaison avec les outils connus.

Avantageusement, le dispositif selon l'invention permet la maintenance avant ou après vol (indifféremment, les effets mécaniques e.g. de dilatation associés aux refroidissements du système de chauffage de la sonde étant négligeables).

Avantageusement, le dispositif selon l'invention peut être transportable et peut notamment être utilisé sur des sondes installées sur avion de manière simple et rapide.

### Description des figures

D'autres caractéristiques, détails et avantages de l'invention ressortiront à la lecture de la description faite en référence aux dessins annexés donnés à titre d'exemple et qui représentent, respectivement :
La [fig.1] illustre un exemple de sonde d'incidence, manipulée par l'invention ;
La [fig.2] illustre un exemple de dispositif selon l'invention pour le contrôle de la géométrie de la sonde incidence ;
La [fig.3] illustre certains aspects des tolérances mécaniques permises par le dispositif selon l'invention pour l'accueil d'une sonde d'incidence montée sur avion ;
La [fig.4] illustre un exemple de mise en place du dispositif selon l'invention sur une sonde d'incidence fixée sur un avion ;
La [fig.5] illustre selon une perspective arrière la mise en place du dispositif selon l'invention.

### Description détaillée de l'invention

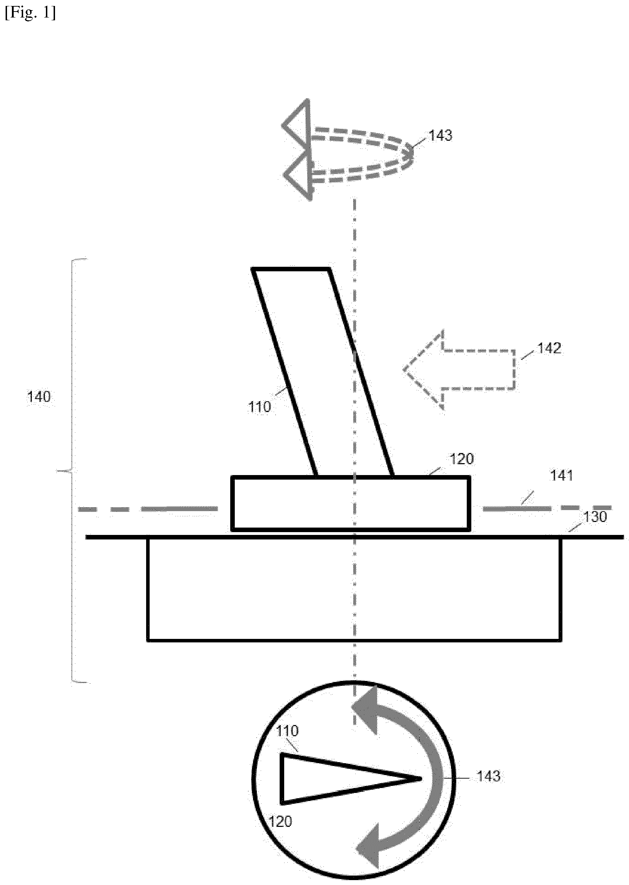

La [fig.1] illustre un exemple de sonde d'incidence, manipulée par l'invention.

Une sonde d'incidence 140 comprend un corps 130 et une girouette.

La girouette comprend un drapeau 110 et une embase 120 (tournante, pivotante).

Le corps 130 est fixé sur une « plaque avion » 141 (selon un design propre à chaque avionneur).

Lors du vol de l'aéronef, le vent relatif 142 oriente la girouette par le drapeau 110 et fait tourner, autour d'un axe 143, l'embase 120 (dont le profil à des effets aérodynamiques négligeables). Des systèmes électromécaniques (non représentés, dit « synchro-résolveurs») permettent alors de déterminer l'angle d'incidence de l'avion en cours de vol.

Le profil du drapeau peut être réalisé selon diverses variantes. Dans un mode de réalisation, le profil est un profil NACA (un profil de section d'aile d'avion, avec un dos et un extrados, parfois symétriques, parfois non). Dans un mode de réalisation, le profil présente une section triangulaire.

La hauteur du drapeau est de l'ordre de 8 cm (variable selon les modèles).

Un aéronef peut comporter une pluralité de sondes d'incidence. Les pannes d'une sonde d'incidence sont généralement déterminées par comparaison entre une première sonde et une seconde sonde. Une différence excessive peut entraîner la prise en compte des données d'une sonde d'incidence de secours tierce.

Le drapeau d'une sonde incidence peut avoir des profils divers (e.g. profil d'aile d'avion, ou autre). L'exemple illustré à la figure 1 montre un drapeau de section triangulaire.

Des modes de réalisation de l'invention sont décrits ci-après.

Il est décrit un dispositif pour contrôler la géométrie d'une sonde d'incidence d'un aéronef, la sonde d'incidence comprenant un corps sur lequel est monté une girouette composée d'une embase pivotante dans le corps et d'un drapeau, ledit dispositif comprenant plusieurs paliers, un palier comprenant une encoche dont les dimensions géométriques sont spécifiquement configurées pour recevoir une portion de ladite sonde d'incidence lorsque le dispositif est placé en butée contre le drapeau de la girouette.

Le dispositif selon l'invention peut comprendre une pluralité de « paliers » ou « bras » ou « étages » ou « mors ».

Les encoches des paliers sont dimensionnées en fonction de marges de tolérances de fabrication prédéfinies, associées aux dimensions nominales de la sonde d'incidence. Selon les modes de réalisation, les tolérances peuvent être différentes.

Dans un mode de réalisation, la tolérance des angles est de plus ou moins (+/-) 1° degré et 30 minutes d'arc. La tolérance pour les distances est de plus ou moins un dixième de millimètre (quelques centaines de microns). Ces règles peuvent néanmoins changer selon les types de sondes concernées.

Par exemple, pour une valeur nominale (idéale, théorique, cible de fabrication) de 8 cm pour la sonde, une distance acceptable pourra être située entre 7,99 cm et 8,01 cm (résultats des procédés de fabrication). Un angle nominal de 17° peut également correspondre à une fabrication réelle située entre 18°30' et 16°30' (qui seront les dimensions de l'encoche le cas échéant). Si la sonde est déformée au point de faire 22° au point considéré, alors il est possible que le dispositif ne puisse mécaniquement pas compléter la sonde. Dans certains cas, l'emboitement restera possible et les dérives seront visibles ou mesurables.

Dans un développement le dispositif comprend deux paliers. Un mode de réalisation à deux paliers est avantageux en ce qu'il est facile à fabriquer et permet de vérifier rapidement (visuellement) que la girouette n'est pas grossièrement détériorée.

Dans un développement, le dispositif comprend trois paliers. Un mode de réalisation à trois paliers est avantageux en ce qu'il constitue un bon compromis entre le nombre de points de contrôle (extrémités, milieu) et le poids et la portabilité. Un contrôle visuel est aisé.

Dans un développement, le dispositif comprend plus de trois paliers. Un mode de réalisation à N paliers, avec N>3 présente certains avantages que les autres configurations présentent pas ou moins. A la limite, quand N est très grand, le dispositif tend vers le moule du drapeau de la girouette. Le nombre de points de contrôle est augmenté ce qui augmente la sûreté de la vérification, mais peut présenter certains inconvénients (notamment d'amoindrir la simplicité et la qualité d'un contrôle visuel le cas échéant). Dans les cas où des contacteurs sont utilisés, cet inconvénient disparait.

Dans un développement, le dispositif comprend en outre une cellule photo-électrique et une source de lumière, comme un laser, arrangés de manière à vérifier en tout ou partie la rectitude du drapeau de la girouette.

Dans des modes de réalisation, le contrôle est *visuel* (i.e. réalisé par l'opérateur qui manipule le dispositif). Par exemple, une girouette tordue laissera des jours ou espace exposés, et il sera possible de conclure que la géométrie de la girouette n'est pas celle attendue. Selon les modes de réalisation, ce contrôle peut être *instrumenté.*

Par exemple une source de lumière d'émission et une cellule photo-électrique de réception peuvent être utilisées ; elles seront placées à différents paliers (par exemple numéro 1 à N-1). Il peut d'ailleurs y avoir plusieurs cellules et lasers (vérifications de segments). Si la girouette est tordue, le flux laser ne passera pas et déclenchera une alerte (témoin lumineux, sonore, vibration, haptique, etc). Inversement, si le flux n'est pas interrompu, un message positif peut être transmis (y compris de manière logique, e.g. sur le téléphone portable de l'opérateur).

Dans d'autres modes de réalisation, un ou plusieurs lasers peuvent être utilisés. Par exemple, un laser peut servir à vérifier la rectitude du drapeau, tandis qu'un laser (a)rasant pourra contribuer à détecter des flancs ou parois endommagés (en particulier s'il est couplé à un capteur photographique ou une caméra ou un dispositif d'acquisition d'image).

Dans un développement, au moins un palier comprend un ou plusieurs capteurs d'images. Dans un mode de réalisation, le dispositif comprend un ou plusieurs dispositifs photographique ou vidéographique. Des images statiques ou des vidéos peuvent être prises (e.g. en macro). Des procédés d'analyse d'images peuvent détecter des détériorations à l'aide des images (e.g. griffures, failles, creux, bosses, etc). Des changements de lumière peuvent être effectués pour mener les analyses. L'utilisation de plusieurs capteurs d'images permet des captures stéréoscopiques et donc des examens de l'état de surface de la girouette.

Dans un développement, au moins un palier est motorisé. Selon les modes de réalisation, un ou plusieurs paliers peuvent être motorisé (plan horizontal et/ou vertical), de manière à échantillonner les déformations de la girouette (le cas échéant) ; par exemple, les paliers peuvent avancer/reculer, et/ou bien encore monter/descendre pour vérifier la géométrie de la sonde. L'avantage de ces modes de réalisation est de constituer un dispositif « universel » de contrôle de la géométrie, i.e. un dispositif qui peut s'adapter à chaque avion ou sonde, par exemple en chargeant un simple fichier de configuration.

Dans un développement, le dispositif est obtenu au moins partiellement par impression additive. Selon les modes de réalisation, l'impression 3D peut se révéler particulièrement adaptée.

Dans un développement, une ou plusieurs parties du dispositif sont dans des matériaux dont les propriétés de dureté sont sélectionnées de manière à ne pas endommager le drapeau de la sonde d'incidence. Le dispositif peut être revêtu ou comprendre des parties par exemple en plastique non abrasif, en téflon, etc. Les matériaux utilisés dans ledit dispositif peuvent être avantageusement d'une dureté inférieure que le traitement du matériau de surface extérieur du drapeau de la sonde d'incidence. Secondairement, les matériaux utilisés sont résistants à la chaleur car la girouette est généralement chauffée (les altitudes élevées caractérisées par des températures très basses). Généralement, au sol après roulement, la sonde refroidit rapidement.

Dans un développement, le dispositif comprend en outre un ou plusieurs témoins de signalisation, afin d'éviter ou de diminuer le risque d'oubli sur avion. Les témoins peuvent comprendre l'utilisation de flashs, de la peinture fluorescente ou phosphorescente, etc.

Dans un développement, le dispositif est connecté. Le dispositif peut par exemple comprendre un module de communication (e.g. Bluetooth, Wifi, 3G, 4G, LTE, 5G etc). Il peut notamment être connecté à un téléphone portable ou un serveur distant.

Dans un développement, le dispositif comprend en outre un mécanisme de maintien dudit dispositif lorsque placé contre la girouette. Dans un mode de réalisation, un mécanisme de « glisser-verrouiller » (en anglais « *slide-and-lock* ») peut en effet faciliter les opérations conduites en hauteur sur un avion arrêté au sol. Le glissement peut être facilité, par exemple, par des revêtements de type téflon, ou l'emploi de microbilles de roulement (ou les deux). Une fois en butée, à la demande de l'opérateur ou bien de manière automatique (e.g. sur détection de butée), un mécanisme de blocage en position peut être activé. De la sorte, l'opérateur peut se déplacer autour du dispositif en action, en évitant de faire tomber le dispositif. Le mécanisme de blocage peut se faire par succion (aspiration pneumatique), par magnétisme (e.g. électroaimant), de manière mécanique (e.g. ergots de maintien, etc), par une combinaison de ces modes de maintien.

Il est décrit un procédé pour le contrôle de la géométrie d'une sonde incidence, comprenant les étapes consistant à :

placer un dispositif selon l'invention contre le drapeau d'une sonde d'incidence à contrôler ; vérifier la géométrie de la sonde d'incidence par rapport à une géométrie prédéfinie, en mesurant par exemple un ou plusieurs points géométriques. Le placement peut être robotisé (bras robotique, drone, etc). Les vérifications quant à la géométrie peuvent être effectuées manuellement et/ou automatiquement.

Dans un développement, le dispositif est placé contre la sonde d'incidence par drone et/ou par un bras robotique. Par exemple, le système d'embarquement des passagers peut comprendre un ou plusieurs bras motorisés, qui peuvent effectuer de telles mises en place.

Dans un développement, le procédé comprend en outre une étape consistant à émettre un message et/ou un signal lumineux et/ou un signal audio et/ou une vibration. Le déclenchement de cette étape peut par exemple se faire en fonction de l'étape consistant à vérifier la géométrie de la sonde d'incidence.

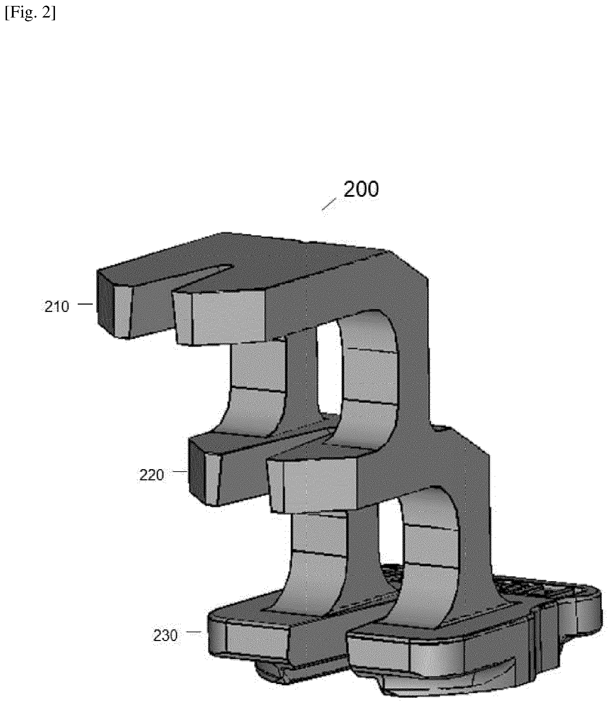

La [fig.2] illustre un exemple de dispositif selon l'invention pour la vérification de conformité d'une sonde d'incidence.

Dans un mode de réalisation, le dispositif selon l'invention comprend deux paliers. Dans un mode de réalisation illustré à la figure 2, le dispositif selon l'invention comprend trois paliers 210, 220 et 230, arrangés selon des espacements réguliers. Le palier inférieur 230 peut être disposé sur l'embase de la sonde d'incidence 120. Dans certains modes de réalisation, le dispositif selon l'invention peut comprendre un grand nombre de paliers (i.e. augmentation du nombre de points de contrôles). Une configuration à trois paliers est généralement suffisante (i.e. compromis satisfaisant poids/ vérification).

Le dispositif selon l'invention peut se positionner sur l'embase 120 de la girouette 130 et permet de vérifier la géométrie de son drapeau, de manière simple, rapide et sûre (sans l'endommager).

Par le terme géométrie, il est fait principalement référence à la rectitude et à la perpendicularité du drapeau. La *rectitude* du drapeau est celle selon l'axe longitudinal du drapeau (bord d'attaque doit être selon un segment de droite, ni convexe ni concave). Le plan du drapeau doit être perpendiculaire à l'embase de la girouette. Les flancs ou faces du drapeau doit être sensiblement planes).

D'autres paramètres géométriques (défauts de forme) peuvent être déterminés ou vérifiés au moyen du dispositif selon l'invention : un ou plusieurs cotes (e.g. hauteur), parallélisme, battement(s), planéité, angle(s), inclinaison(s), position(s), symétrie(s) ou dissymétries(s), perpendicularité, etc. Par ailleurs, des états de surface peuvent être étudiés (e.g. corrosion, griffures, fusion partielle, etc).

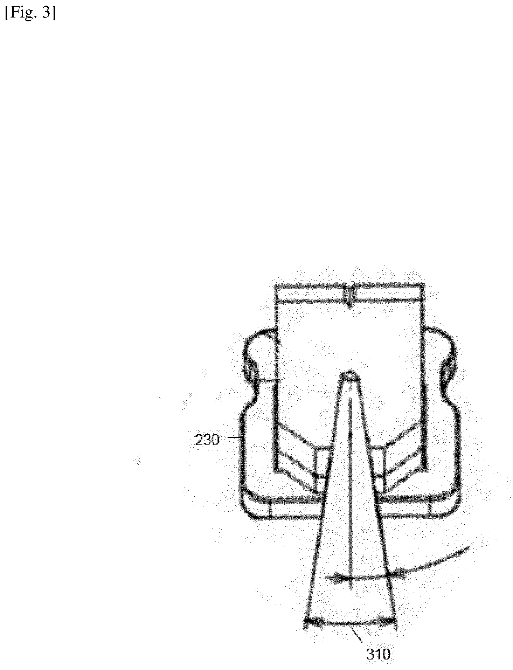

La [fig.3] illustre certains aspects des tolérances mécaniques permises par le dispositif selon l'invention pour l'accueil de la sonde d'incidence montée sur avion. L'angle 310 correspond à l'angle de la section triangulaire du drapeau de la girouette.

Les tolérances mécaniques peuvent être obtenues de manière mécanique (e.g. quelques centaines de micromètres de jeu entre les mâchoires de chaque palier). Si la sonde d'incidence est excessivement endommagée alors l'enfiche du drapeau dans le dispositif selon l'invention peut devenir impossible. Dans les cas de dommages légers, les cas majoritaires, le dispositif permet l'inspection des déformations. En d'autres termes, le dispositif selon l'invention peut « encoder » (physiquement) les tolérances mécaniques acceptables quant aux déformations du drapeau de la sonde. S'il existe très peu de marges quant à la géométrie désirée de la sonde, les dimensions d'accueil inscrites dans le dispositif 200 seront très proches des dimensions nominales.

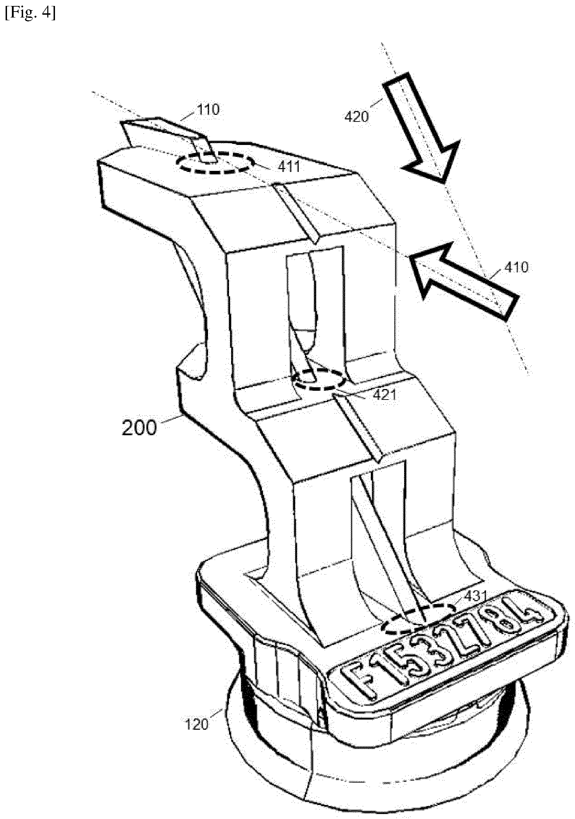

La [fig.4] illustre un exemple de mise en place du dispositif selon l'invention sur une girouette.

Cette mise en place peut s'effectuer de différentes manières. Dans un mode de réalisation, la mise en place est effectuée par glissement latéral 410. Dans un mode de réalisation (secondaire), la mise en place est effectuée par enfichement (de haut en bas); ce dernier mode de réalisation peut permettre un contrôle du flanc du drapeau, mais comporte des risques associés (e.g. rayures).

Lorsque le dispositif selon l'invention est poussé latéralement, les (trois) bras qui le composent épousent le profil de la girouette. Lorsque l'outillage est positionné sur l'embase de la girouette, les bras peuvent se mettre en contact avec celle-ci le cas échéant, signifiant que la girouette n'est pas tordue ou endommagée. Plusieurs zones de contrôle visuel sont accessibles par exemple les zones 411, 421 et 431. Si la rectitude du drapeau est mise en défaut, alors un ou plusieurs jours seront visibles au niveau des zones de contrôle visuel. Par exemple, la zone de contrôle 421 laissera apparaître que le drapeau n'est pas parfaitement en contact avec le palier 200.

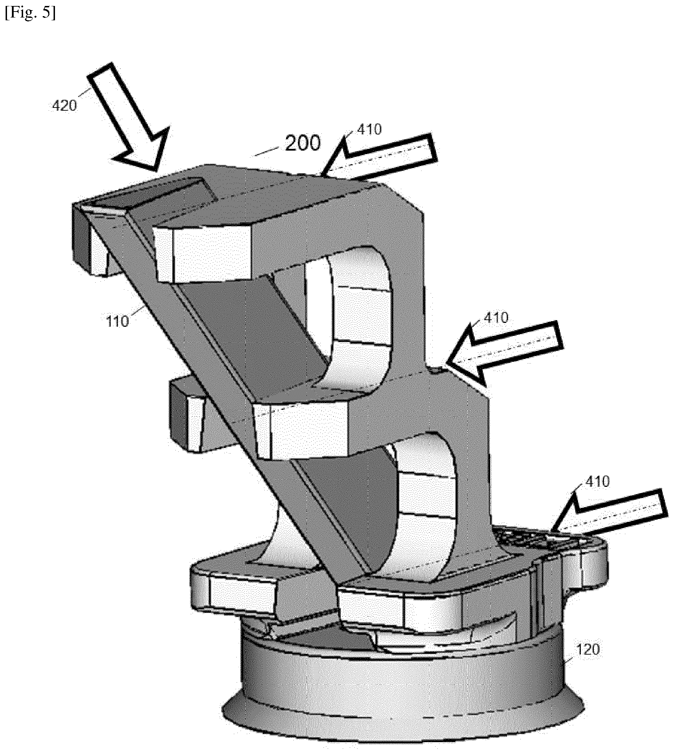

La [fig.5] illustre selon une perspective arrière la mise en place du dispositif selon l'invention pour le contrôle de la géométrie de la sonde incidence.

Le dispositif selon l'invention 200 est venu en contact de l'arrière vers l'avant pour enserrer le drapeau 110 et s'enficher sur l'embase 120. Alternativement, le dispositif peut être enfiché ou enfilé (du haut vers le bas) sur la girouette sur avion.

De très nombreuses variantes de réalisation sont possibles. La description ci-après n'est pas exhaustive et les variations peuvent être combinées entre elles.

Dans un mode de réalisation optionnel, chaque palier comporte des graduations (par exemple millimétriques) permettant à l'utilisateur de quantifier visuellement des dommages occasionnés sur la girouette.

Dans un mode de réalisation optionnel, des contacteurs électriques peuvent être reliés à des systèmes lumineux (par exemple des LED disposées dans les zones de contrôle visuel 411,421 et 431). De la sorte, un utilisateur placé en hauteur contre l'avion et plaçant le dispositif de 200 en butée contre le drapeau 110 sera notifié du contact (e.g. LED couleur verte) ou de l'absence de contact (e.g. LED couleur rouge) entre le drapeau 110 le dispositif de 200 (au niveau des paliers). Dans un mode de réalisation, un mauvais contact peut être signifié par l'emploi d'une LED de couleur orange. Un affichage unique peut synthétiser la situation (par exemple sur le dessus ou sur les côtés du dispositif, afin d'éviter les contorsions de l'utilisateur souhaitant procéder à la vérification de la géométrie de la sonde d'incidence).

Dans un mode de réalisation optionnel, un ou plusieurs paliers sont motorisés (e.g. avancement et recul de quelques millimètres). Ainsi le dispositif selon l'invention peut être *dynamique,* et par suite quantifier les dimensions géométriques de la sonde vérifiée.

Dans un mode de réalisation optionnel, il est utilisé un matériau résistant pour éviter les déformations et ne pas endommager le drapeau. Par exemple du Fortal 7075 peut être utilisé. Le traitement de surface peut consister en une anodisation incolore associée au Fluoref 800. La peinture peut être par exemple PAINT PU NF 1805 03FT1/DT6SC.

Dans un mode de réalisation optionnel, le dispositif selon l'invention peut être de couleur rouge (ou fluorescente ou phosphorescente) pour éviter un oubli sur avion. Des alternatives comprennent l'utilisation de témoins lumineux à flashs discontinus tant que le dispositif n'est pas déposé de la surface de l'avion, etc

## Revendications

1. Ensemble pour contrôler la géométrie d'un drapeau (110) d'une sonde d'incidence (140) d'un aéronef directement sur l'aéronef, ledit ensemble comprenant la sonde d'incidence (140) comprenant un corps (130) sur lequel est monté une girouette composée d'une embase (120) pivotante dans le corps (130) et du drapeau (110), ainsi qu'un dispositif (200) comprenant plusieurs paliers (210, 220, 230), chaque palier comprenant une encoche dont les dimensions géométriques sont spécifiquement configurées pour recevoir et épouser une portion du drapeau (110) de ladite sonde d'incidence (140) lorsque le dispositif (200) est placé en butée contre le drapeau(110) de la girouette directement sur l'aéronef.

2. Ensemble pour contrôler la géométrie d'un drapeau (110) d'une sonde d'incidence (140) d'un aéronef selon la revendication 1, dans lequel ledit dispositif (200) comprend deux paliers.

3. Ensemble pour contrôler la géométrie d'un drapeau (110) d'une sonde d'incidence (140) d'un aéronef selon la revendication 1, dans lequel ledit dispositif (200) comprend trois paliers (210, 220, 230).

4. Ensemble pour contrôler la géométrie d'un drapeau (110) d'une sonde d'incidence (140) d'un aéronef selon la revendication 1, dans lequel ledit dispositif (200) comprend plus de trois paliers.

5. Ensemble pour contrôler la géométrie d'un drapeau (110) d'une sonde d'incidence (140) d'un aéronef selon l'une quelconque des revendications précédentes, dans lequel le dispositif (220) comprend en outre une cellule photo-électrique et une source de lumière, comme un laser, arrangés de manière à vérifier en tout ou partie la rectitude du drapeau (110) de la girouette.

6. Ensemble pour contrôler la géométrie d'un drapeau (110) d'une sonde d'incidence (140) d'un aéronef selon l'une quelconque des revendications précédentes, dans lequel au moins un palier comprend un ou plusieurs capteurs d'images.

7. Ensemble pour contrôler la géométrie d'un drapeau (110) d'une sonde d'incidence (140) d'un aéronef selon l'une quelconque des revendications précédentes, dans lequel au moins un palier est motorisé.

8. Ensemble pour contrôler la géométrie d'un drapeau (110) d'une sonde d'incidence (140) d'un aéronef selon l'une quelconque des revendications précédentes, dans lequel ledit dispositif (200) est obtenu au moins partiellement par impression additive.

9. Ensemble pour contrôler la géométrie d'un drapeau (110) d'une sonde d'incidence (140) d'un aéronef selon l'une quelconque des revendications précédentes, dans lequel une ou plusieurs parties du dispositif (200) sont dans des matériaux dont les propriétés de dureté sont inférieures à celle du matériau de surface extérieur du drapeau (110) de la sonde d'incidence (140).

10. Ensemble pour contrôler la géométrie d'un drapeau (110) d'une sonde d'incidence (140) d'un aéronef selon l'une quelconque des revendications précédentes, comportant en outre un ou plusieurs témoins de signalisation, afin d'éviter ou de diminuer le risque d'oubli sur avion.

11. Ensemble pour contrôler la géométrie d'un drapeau (110) d'une sonde d'incidence (140) d'un aéronef selon l'une quelconque des revendications précédentes, ledit dispositif (200) étant adapté pour être connecté, par exemple à un téléphone portable ou à un serveur distant.

12. Ensemble pour contrôler la géométrie d'un drapeau (110) d'une sonde d'incidence (140) d'un aéronef selon l'une quelconque des revendications précédentes, comprenant en outre un mécanisme de maintien dudit dispositif (200) lorsque celui-ci est placé contre la girouette.

13. Procédé pour le contrôle de la géométrie du drapeau (110) d'une sonde incidence (140) directement sur l'aéronef, comprenant les étapes consistant à :
- utiliser un ensemble selon l'une quelconque des revendications 1 à 12 de façon à placer le dispositif (200) en butée contre le drapeau (110) de la sonde d'incidence (140) à contrôler directement sur l'aéronef;
- vérifier la géométrie du drapeau (110) de la sonde d'incidence (140) par rapport à une géométrie prédéfinie, en mesurant plusieurs points géométriques du dispositif (200) placé contre le drapeau (110) de la sonde d'incidence (140).

14. Procédé selon la revendication 13, dans lequel le dispositif (200) est placé contre la sonde d'incidence (140) par drone et/ou par un bras robotique.

15. Procédé selon l'une quelconque des revendications 13 ou 14, comprenant en outre une étape consistant à émettre un message et/ou un signal lumineux et/ou un signal audio et/ou une vibration, par exemple en fonction de l'étape consistant à vérifier la géométrie du drapeau (110) de la sonde d'incidence(140).

## Patentansprüche

1. Aufbau zum Überprüfen der Geometrie eines Leitwerks (110) einer Einfallwinkelsonde (140) eines Luftfahrzeugs direkt an dem Luftfahrzeug, wobei der Aufbau, der die Einfallwinkelsonde (140) umfasst, einen Körper (130), auf dem eine Windfahne montiert ist, die aus einer in dem Körper (130) schwenkbaren Grundfläche (120) und dem Leitwerk (110) zusammengesetzt ist, sowie eine Vorrichtung (200) umfasst, die mehrere Lager (210, 220, 230) umfasst, wobei jedes Lager eine Kerbe umfasst, deren geometrische Abmessungen speziell dafür konfiguriert sind, einen Abschnitt des Leitwerks (110) der Einfallwinkelsonde (140) aufzunehmen und sich an diesen anzupassen, wenn die Vorrichtung (200) an dem Leitwerk (110) der Windfahne direkt an dem Luftfahrzeug anliegend angeordnet wird.

2. Aufbau zum Überprüfen der Geometrie eines Leitwerks (110) einer Einfallwinkelsonde (140) eines Luftfahrzeugs nach Anspruch 1, wobei die Vorrichtung (200) zwei Lager umfasst.

3. Aufbau zum Überprüfen der Geometrie eines Leitwerks (110) einer Einfallwinkelsonde (140) eines Luftfahrzeugs nach Anspruch 1, wobei die Vorrichtung (200) drei Lager (210, 220, 230) umfasst.

4. Aufbau zum Überprüfen der Geometrie eines Leitwerks (110) einer Einfallwinkelsonde (140) eines Luftfahrzeugs nach Anspruch 1, wobei die Vorrichtung (200) mehr als drei Lager umfasst.

5. Aufbau zum Überprüfen der Geometrie eines Leitwerks (110) einer Einfallwinkelsonde (140) eines Luftfahrzeugs nach einem der vorhergehenden Ansprüche, wobei die Vorrichtung (220) ferner eine Fotozelle und eine Lichtquelle, wie einen Laser, umfasst, die so angeordnet sind, dass sie die Geradlinigkeit des Leitwerks (110) der Windfahne insgesamt oder teilweise überprüfen.

6. Aufbau zum Überprüfen der Geometrie eines Leitwerks (110) einer Einfallwinkelsonde (140) eines Luftfahrzeugs nach einem der vorhergehenden Ansprüche, wobei mindestens ein Lager einen oder mehrere Bildsensoren umfasst.

7. Aufbau zum Überprüfen der Geometrie eines Leitwerks (110) einer Einfallwinkelsonde (140) eines Luftfahrzeugs nach einem der vorhergehenden Ansprüche, wobei mindestens ein Lager motorisiert ist.

8. Aufbau zum Überprüfen der Geometrie eines Leitwerks (110) einer Einfallwinkelsonde (140) eines Luftfahrzeugs nach einem der vorhergehenden Ansprüche, wobei die Vorrichtung (200) mindestens teilweise durch additives Drucken erhalten wird.

9. Aufbau zum Überprüfen der Geometrie eines Leitwerks (110) einer Einfallwinkelsonde (140) eines Luftfahrzeugs nach einem der vorhergehenden Ansprüche, wobei einer oder mehrere Teile der Vorrichtung (200) aus Materialien gefertigt sind, deren Härteeigenschaften geringer sind als diejenigen des Materials der Außenfläche des Leitwerks (110) der Einfallwinkelsonde (140).

10. Aufbau zum Überprüfen der Geometrie eines Leitwerks (110) einer Einfallwinkelsonde (140) eines Luftfahrzeugs nach einem der vorhergehenden Ansprüche, ferner aufweisend einen oder mehrere Signalrückmelder, um das Risiko, an dem Flugzeug zurückgelassen zu werden, zu verhindern oder zu verringern.

11. Aufbau zum Überprüfen der Geometrie eines Leitwerks (110) einer Einfallwinkelsonde (140) eines Luftfahrzeugs nach einem der vorhergehenden Ansprüche, wobei die Vorrichtung (200) dafür geeignet ist, zum Beispiel mit einem Mobiltelefon oder einem entfernten Server verbunden zu werden.

12. Aufbau zum Überprüfen der Geometrie eines Leitwerks (110) einer Einfallwinkelsonde (140) eines Luftfahrzeugs nach einem der vorhergehenden Ansprüche, ferner umfassend einen Haltemechanismus der Vorrichtung (200), wenn diese an der Windfahne platziert wird.

13. Verfahren zum Überprüfen der Geometrie des Leitwerks (110) einer Einfallwinkelsonde (140) direkt an dem Luftfahrzeug, umfassend die Schritte bestehend aus:
- Verwenden eines Aufbaus nach einem der Ansprüche 1 bis 12 derart, dass die Vorrichtung (200) in Anlage an dem Leitwerk (110) der zu überprüfenden Einfallwinkelsonde (140) direkt an dem Luftfahrzeug platziert wird;
- Prüfen der Geometrie des Leitwerks (110) der Einfallwinkelsonde (140) in Bezug auf eine vordefinierte Geometrie durch Messen von mehreren geometrischen Punkten der Vorrichtung (200), die gegen das Leitwerk (110) der Einfallwinkelsonde (140) platziert ist.

14. Verfahren nach Anspruch 13, wobei die Vorrichtung (200) durch eine Drohne und/oder durch einen Roboterarm an der Einfallwinkelsonde (140) platziert wird.

15. Verfahren nach einem der Ansprüche 13 oder 14, ferner umfassend einen Schritt, der darin besteht, eine Nachricht und/oder ein Lichtsignal und/oder ein akustisches Signal und/oder eine Vibration auszugeben, zum Beispiel in Abhängigkeit von dem Schritt, der darin besteht, die Geometrie des Leitwerks (110) der Einfallwinkelsonde (140) zu prüfen.

## Claims

1. An assembly for controlling the geometry of a vane (110) of an angle-of-attack probe (140) of an aircraft directly on the aircraft, said assembly comprising the angle-of-attack probe (140), comprising a body (130) on which there is mounted a vane assembly made up of a base (120) pivoting in the body (130) and of the vane (110), as well as a device (200) comprising multiple bearings (210, 220, 230), each bearing comprising a slot, the geometric dimensions of which are specifically configured to accept and conform a portion of the vane (110) of said angle-of-attack probe (140) when the device (200) is butted against the vane (110) of the vane assembly directly on the aircraft.

2. The assembly for controlling the geometry of a vane (110) of an angle-of-attack probe (140) of an aircraft according to claim 1, wherein said device (200) comprises two bearings.

3. The assembly for controlling the geometry of a vane (110) of an angle-of-attack probe (140) of an aircraft according to claim 1, wherein said device (200) comprises three bearings (210, 220, 230).

4. The assembly for controlling the geometry of a vane (110) of an angle-of-attack probe (140) of an aircraft according to claim 1, wherein said device (200) comprises more than three bearings.

5. The assembly for controlling the geometry of a vane (110) of an angle-of-attack probe (140) of an aircraft according to any one of the preceding claims, wherein the device (220) further comprises a photoelectric cell and a light source, such as a laser, which are arranged so as to check all or part of the straightness of the vane (110) of the vane assembly.

6. The assembly for controlling the geometry of a vane (110) of an angle-of-attack probe (140) of an aircraft according to any one of the preceding claims, wherein at least one bearing comprises one or more image sensors.

7. The assembly for controlling the geometry of a vane (110) of an angle-of-attack probe (140) of an aircraft according to any one of the preceding claims, wherein at least one bearing is motorised.

8. The assembly for controlling the geometry of a vane (110) of an angle-of-attack probe (140) of an aircraft according to any one of the preceding claims, wherein said device (200) is obtained at least partially by additive printing.

9. The assembly for controlling the geometry of a vane (110) of an angle-of-attack probe (140) of an aircraft according to any one of the preceding claims, wherein one or more parts of the device (200) are made from materials, the hardness properties of which are inferior to that of the external surface material of the vane (110) of the angle-of-attack probe (140).

10. The assembly for controlling the geometry of a vane (110) of an angle-of-attack probe (140) of an aircraft according to any one of the preceding claims, further having one or more signal indicators to avoid or reduce the risk of being left behind on the aircraft.

11. The assembly for controlling the geometry of a vane (110) of an angle-of-attack probe (140) of an aircraft according to any one of the preceding claims, said device (200) being adapted for being connected, for example, to a mobile phone or to a remote server.

12. The assembly for controlling the geometry of a vane (110) of an angle-of-attack probe (140) of an aircraft according to any one of the preceding claims, further comprising a retaining mechanism for retaining said device (200) when the latter is positioned against the vane assembly.

13. A method for controlling the geometry of a vane (110) of an angle-of-attack probe (140) directly on the aircraft, comprising the steps consisting in:
- using an assembly according to any one of claims 1 to 12 so as to place the device (200) butted against the vane (110) of the angle-of-attack probe (140) that is to be controlled directly on the aircraft;
- checking the geometry of the vane (110) of the angle-of-attack probe (140) with respect to a predefined geometry by measuring multiple geometric points of the device (200) placed against the vane (110) of the angle-of-attack probe (140).

14. The method according to claim 13, wherein the device (200) is placed against the angle-of-attack probe (140) by a drone and/or by a robotic arm.

15. The method according to one of claims 13 or 14, further comprising a step consisting in emitting a message and/or a light signal and/or an audio signal and/or a vibration, for example depending on the step consisting in checking the geometry of the vane (110) of the angle-of-attack probe (140).
